# EUROPEAN PATENT APPLICATION

(11) **EP 4 811 232 A1**
(43) Date of publication of application: **23.09.2026**
(21) Application number: 24891105.9
(22) Date of filing: 30.09.2024
(51) Int. Cl.: G06Q 10/06

(54) **SIMULATION DEVICE AND SIMULATION METHOD**

(30) Priority: 15.11.2023 JP 2023194433
(71) Applicant: Hitachi, Ltd., Tokyo 100-8280 (JP)
(72) Inventor: YAMAMOTO, Hiroki, Tokyo 100-8280 (JP)
(74) Representative: Mewburn Ellis LLP
(86) International application number: PCT/JP2024/035012
(87) International publication number: WO 2025/105063

(57) **Abstract**

This simulation device comprises: a financial information processing unit 10 that calculates direct revenue and expenditures when decarbonization measures are implemented under introduction conditions, and also estimates indirect revenue resulting from non-financial information; a determination support unit 7 that, when the decarbonization measures are implemented under the introduction conditions, performs a simulation as to whether or not a financial balance target and a decarbonization target are satisfied taking the indirect revenue into account; and a dashboard 100 that outputs a screen regarding the simulation by the determination support unit 7.

## Description

### Technical Field

The present invention relates to a simulation device and a simulation method and is suitably applied to, for example, a simulation device relating to a technology for presenting a decarbonization measure proposal corresponding to a decarbonization target.

### Background Art

In recent years, interest in environmental consideration has been increasing in the production of products. PTL 1 discloses a technique that aims to effectively support selection of a measure proposal for reducing environmental load, sorts measure proposals acquired from a measure information table on the basis of values corresponding to priorities for selecting a measure proposal to be implemented, calculates cumulative values such as environmental conservation effect values for the measure proposals, and outputs the measure proposals and the cumulative values.

### Citation List

### Patent Literature

PTL 1: JP 2010-134688 A

### Summary of Invention

### Technical Problem

However, although indirect revenue can also be considered as another effect of environmental consideration, the technology disclosed in PTL 1 does not consider quantitatively indicating such indirect revenue, and therefore determining whether a measure proposal is appropriate has been difficult.

The present invention has been made in view of the above points, and proposes a simulation device and a simulation method capable of quantitatively presenting indirect revenue in formulating decarbonization measures.

### Solution to Problem

In order to solve such problems, in the present invention, a simulation device includes: a target input unit that inputs a decarbonization target relating to decarbonization and a financial balance target relating to a financial balance; a condition setting unit that sets introduction conditions for a decarbonization measure corresponding to the decarbonization target; a financial information processing unit that calculates direct revenue and expenditures when the decarbonization measures are implemented under the introduction conditions, and also estimates indirect revenue resulting from non-financial information; a determination support unit that, when the decarbonization measures are implemented under the introduction conditions, performs a simulation as to whether or not the financial balance target and the decarbonization target are satisfied taking the indirect revenue into account; and an interface that outputs a screen regarding the simulation by the determination support unit.

In addition, in the present invention, a simulation method includes: a target input step of accepting, by a target input unit, input of a decarbonization target relating to decarbonization and a financial balance target relating to a financial balance; a condition setting step of setting, by a condition setting unit, introduction conditions for a decarbonization measure corresponding to the decarbonization target; a financial information processing step of calculating, by a financial information processing unit, direct revenue and expenditures when the decarbonization measures are implemented under the introduction conditions, and also estimating indirect revenue resulting from non-financial information; a determination support step of performing, by a determination support unit, when the decarbonization measures are implemented under the introduction conditions, a simulation as to whether or not the financial balance target and the decarbonization target are satisfied taking the indirect revenue into account; and an output step of outputting, to an interface, a screen regarding the simulation by the determination support step.

### Advantageous Effects of Invention

According to the present invention, indirect revenue can be quantitatively presented in formulating decarbonization measures.

### Brief Description of Drawings

[FIG. 1] FIG. 1 is a system configuration diagram illustrating a configuration example of a simulation device according to the present embodiment.
[FIG. 2] FIG. 2 is a diagram illustrating an example of a KPI tree.
[FIG. 3] FIG. 3 is a diagram illustrating an example of a causal relationship in which ESG activities affect management.
[FIG. 4] FIG. 4 is a diagram illustrating an example of a revenue prediction algorithm.
[FIG. 5] FIG. 5 is a diagram illustrating an example of an increase estimate of an ESG non-investment amount.
[FIG. 6] FIG. 6 is a diagram illustrating a prediction example of an environment, social, governance (ESG) investment revenue unit price using a deductive method.
[FIG. 7] FIG. 7 is a diagram illustrating an example of a predicted value of access funds (ESG).
[FIG. 8] FIG. 8 is a diagram illustrating an example of a simulation screen.
[FIG. 9] FIG. 9 is a diagram illustrating an example of the simulation screen.
[FIG. 10] FIG. 10 is a diagram illustrating an example of the simulation screen.

### Description of Embodiments

An embodiment of the present invention will be described in detail below with reference to the drawings.

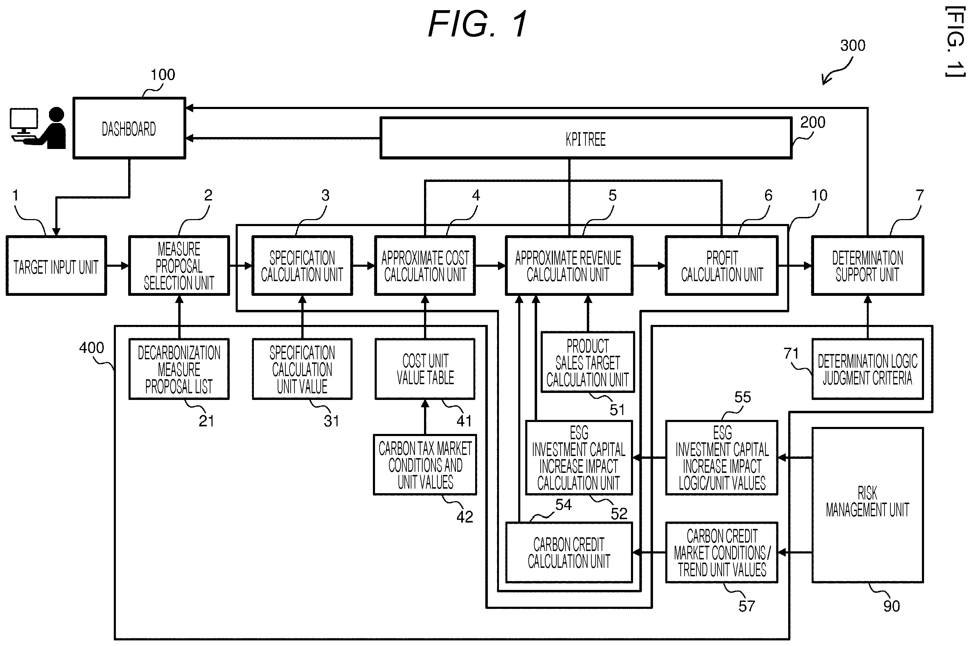

FIG. 1 is a system configuration diagram illustrating a configuration example of a simulation device 300 according to the present embodiment. The simulation device 300 includes a key performance indicators (KPI) tree 200, a dashboard 100, a target input unit 1, a measure proposal selection unit 2, a financial information processing unit 10, a determination support unit 7, and a database 400.

The database 400 includes various tables as described later and can store various data. The database 400 can store, for example, a later-described decarbonization measure proposal list 21 including at least one proposal for a decarbonization measure for a decarbonization target (hereinafter referred to as a "decarbonization measure proposal"), as well as a decarbonization measure and introduction conditions for the decarbonization measure.

The dashboard 100 is an example of an interface, and displays a simulation screen regarding a simulation by the determination support unit 7 and forms such as a condition input form for the simulation. In addition, under control of the determination support unit 7, the dashboard 100 outputs a simulation result screen as a result of the simulation by the determination support unit 7.

For example, a target relating to decarbonization (hereinafter referred to as a "decarbonization target") and a target relating to a financial balance (hereinafter referred to as a "financial balance target") are input to the dashboard 100 by an operator such as a manager involved in planning decarbonization (hereinafter simply referred to as an "operator"). The dashboard 100 displays a determination result by the determination support unit 7 described later. Details of the dashboard 100 will be described later.

The KPI tree 200 indicates, for example, a KPI tree that can be defined from a management perspective. The KPI tree 200 is displayed on the dashboard 100. Details of the KPI tree 200 will be described later.

The target input unit 1 accepts, via the dashboard 100, input of the decarbonization target relating to decarbonization and the financial balance target relating to a financial balance (target input step), and registers information on the decarbonization target and information on the financial balance target in the database 400. Specifically, the target input unit 1 causes the dashboard 100 to display, for example, a predetermined form described later and registers, in the database 400, information on the decarbonization target and the financial balance target input by the operator into the form.

The measure proposal selection unit 2 is an example of a condition setting unit, and sets introduction conditions for a decarbonization measure corresponding to a decarbonization measure proposal for the decarbonization target (condition setting step). The measure proposal selection unit 2 selects, from the database 400, a decarbonization measure proposal for the decarbonization target on the basis of introduction conditions for the decarbonization measure input by the operator in the above-described form. Note that, the measure proposal selection unit 2 can also newly create at least one of a decarbonization measure proposal and introduction conditions for the decarbonization measure proposal and register the at least one in the database 400.

The measure proposal selection unit 2 reads the decarbonization measure proposal list 21 from the database 400 and selects any one of a plurality of decarbonization measure proposals included in the decarbonization measure proposal list 21. The decarbonization measure proposal list 21 is a list including a plurality of decarbonization measure proposals for achieving the decarbonization target. When a new decarbonization measure proposal is added as described above, the new decarbonization measure is added to the decarbonization measure proposal list 21 accordingly. In the present embodiment, as a decarbonization measure proposal, for example, reducing CO2 by XX (XX: numerical value) tons as a CO2 emission reduction target (corresponding to "XX t CO2" in the drawing) is exemplified. Note that, when all effects of green house gases (GHG) other than carbon dioxide (CO2), such as methane and nitric oxide, are taken into consideration, XX t CO2-e meaning an emission amount equivalent to the CO2 emission amount is used.

The financial information processing unit 10 calculates direct revenue and expenditures when the decarbonization measure is implemented under the above-described introduction conditions, and estimates indirect revenue resulting from non-financial information (financial information processing step). Here, "indirect revenue resulting from non-financial information" indicates other revenue not included in the direct revenue and expenditures when the decarbonization measure is implemented under the above-described introduction conditions. Details of the financial information processing unit 10 will be described later.

The determination support unit 7 executes, when the decarbonization measure is implemented under the above-described introduction conditions, a simulation as to whether or not the above-described financial balance target and decarbonization target are satisfied taking indirect revenue into account (determination support step). The determination support unit 7 performs display control for displaying a later-described simulation screen, forms such as a condition input form for inputting conditions for executing the simulation (later-described effect simulation conditions), and a simulation result screen regarding results of the simulation. In the present embodiment, these screens are also collectively referred to as "screens regarding the simulation". The dashboard 100 outputs a screen regarding the simulation by the above-described determination support step (output step).

Details of the above-described financial information processing unit 10 will be described. The financial information processing unit 10 includes a specification calculation unit 3, an approximate cost calculation unit 4, an approximate revenue calculation unit 5, a product sales target calculation unit 51, an ESG investment capital increase impact calculation unit 52 (indirect revenue estimation unit), a carbon credit calculation unit 54 (indirect revenue estimation unit), a profit calculation unit 6, and a risk management unit 90 (indirect revenue estimation unit). Note that, in the present embodiment, among these components, the ESG investment capital increase impact calculation unit 52, the carbon credit calculation unit 54, and the risk management unit 90 are examples of the indirect revenue estimation unit that estimates indirect revenue resulting from non-financial information.

The specification calculation unit 3 outputs a detailed specification of the decarbonization measure proposal selected by the measure proposal selection unit 2. Here, as the detailed specification of the decarbonization measure proposal, for example, setting the power consumption to XX (XX: numerical value) kilowatts ("XX kW (kilowatts)") can be exemplified. The specification calculation unit 3 reads a specification calculation unit value 31 derived from the CO2 emission reduction target. Here, in the present embodiment, "unit value" indicates, for example, a converted amount of CO2 emitted according to business activities.

The approximate cost calculation unit 4 reads a cost unit value table 41 based on carbon tax market conditions and unit values 42 indicating carbon tax market conditions and unit values, and calculates an approximate cost. The cost unit value table 41 includes, for example, information relating to installation cost, operating cost, and a degree of carbon tax reduction indicating a degree of reduction of carbon tax.

The risk management unit 90 is an example of the indirect revenue estimation unit, and executes control for estimating indirect revenue resulting from the above-described non-financial information. The non-financial information may include, for example, a risk obtained by machine learning described later.

The risk management unit 90 manages at least one of a downside risk and an upside risk that can affect estimation of indirect revenue (hereinafter sometimes abbreviated as "indirect revenue").

The risk management unit 90 may predict downside and upside risks by, for example, machine learning using generative artificial intelligence (AI).

The risk management unit 90 may, for example, learn a risk prediction model by using, as explanatory variables, a production quantity of products of other companies that compete with products of its own company and a market size of the products and by using, as an objective function, whether a risk can become a downside risk or can become an upside risk, and may use the learned risk prediction model to predict which of a downside risk and an upside risk a future risk can become (or how severe a risk a future risk can become).

Alternatively, the risk management unit 90 may perform risk management by another method without using the generative AI.

As first risk management relating to a downside risk, the risk management unit 90 manages, for example, a risk that the decarbonization target and the financial balance target become difficult to achieve because of circumstances of another company, for example, because a competing company has introduced a similar product.

As second risk management relating to a downside risk, the risk management unit 90 manages, for example, a risk that an amount of power generated by wind power generation installed at its own company is lower than an initial prediction, an effect of decarbonization is not obtained as much as expected, and the decarbonization target and the financial balance target become difficult to achieve.

As third risk management relating to a downside risk, the risk management unit 90 manages, for example, a risk that, due to geographical factors, investment in its own company does not increase as much as initially predicted and the decarbonization target and the financial balance target become difficult to achieve.

When a downside risk is managed by the risk management unit 90 in this manner, the approximate revenue calculation unit 5 calculates revenue in a direction in which revenue decreases. In addition, a case in which the examples given here occur in a combined manner can also be handled.

On the other hand, as risk management relating to an upside risk, the risk management unit 90 manages, for example, a risk that sunlight hours are longer than in a normal year and an amount of power generated by solar power generation installed at its own company becomes larger than usual.

When an upside risk is managed by the risk management unit 90 in this manner, the approximate revenue calculation unit 5 calculates revenue in a direction in which revenue increases. In addition, a case in which a plurality of upside risks occur in a combined manner can also be handled.

The risk management unit 90 provides, to the ESG investment capital increase impact calculation unit 52, for example, ESG investment capital increase impact logic/unit values 55 indicating logic and unit values that can affect a capital increase of ESG investment, on the basis of at least one of the managed upside risk and downside risk.

The ESG investment capital increase impact calculation unit 52 is an example of the indirect revenue estimation unit, and estimates indirect revenue resulting from the above-described non-financial information. The ESG investment capital increase impact calculation unit 52 calculates investment impact information on an impact on a capital increase of ESG investment on the basis of the ESG investment capital increase impact logic/unit values 55, and estimates indirect revenue on the basis of the investment impact information.

In addition, the risk management unit 90 provides, to the carbon credit calculation unit 54, for example, carbon credit market conditions and trend unit values 57 on the basis of at least one of the managed upside risk and downside risk.

The carbon credit calculation unit 54 is an example of the indirect revenue estimation unit, and estimates indirect revenue resulting from the above-described non-financial information. The carbon credit calculation unit 54 calculates carbon credits on the basis of the carbon credit market conditions and trend unit values 57.

The product sales target calculation unit 51 calculates, as a product sales target, for example, operating profit to be targeted.

The approximate revenue calculation unit 5 receives a product sales target from the product sales target calculation unit 51, receives, from the ESG investment capital increase impact calculation unit 52, investment impact information relating to an impact on a capital increase of ESG investment, and receives carbon credits from the carbon credit calculation unit 54, thereby calculating approximate revenue and outputting the approximate revenue to the profit calculation unit 6.

The profit calculation unit 6 calculates approximate profit by subtracting the approximate cost calculated by the approximate cost calculation unit 4 from the approximate revenue calculated by the profit calculation unit 6.

The determination support unit 7 creates, on the basis of determination logic judgment criteria 71, determination support information for supporting determination from the approximate profit calculated by the profit calculation unit 6, and outputs the determination support information to the dashboard 100. The dashboard 100 displays the above-described KPI tree 200 and, as an example of the determination support information, a simulation screen described later.

The operator refers to the KPI tree 200 and the determination support information on the simulation screen displayed on the dashboard 100, and sets a decarbonization target or plans decarbonization.

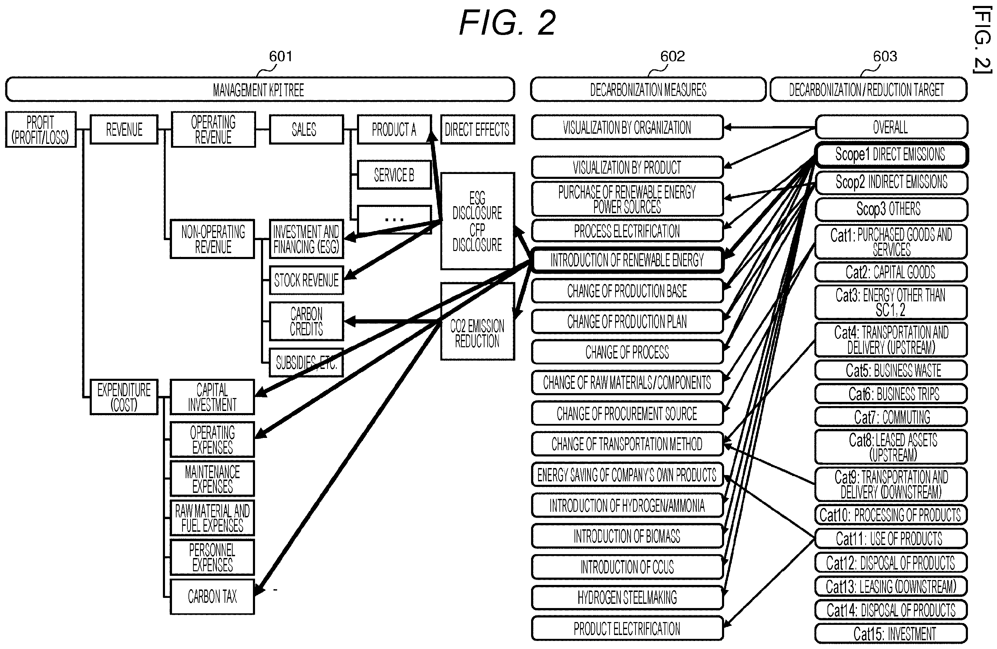

FIG. 2 is a diagram illustrating an example of the KPI tree 200. The KPI tree 200 includes a management KPI tree 601, decarbonization measures 602, and a decarbonization and reduction target 603. In the KPI tree 200, connection relationships are as follows. Note that, in the following description, "connection" indicates that, when a KPI is taken into consideration, a leading-end side of an arrow of the connection can affect a trailing-end side. First, profit (profit/loss) is connected to revenue and expenditure (cost).

Revenue is connected to operating revenue and non-operating revenue. The operating revenue is connected to sales. The sales are connected to product A as an example of a product, service B as an example of a service, and the like. On the other hand, the non-operating revenue is connected to investment and financing (ESG), stock revenue, carbon credits, subsidies, and the like.

The management KPI tree 601 has, as direct effects, effects such as ESG disclosure, carbon foot print (CFP) disclosure, and CO2 emissions reduction.

On the other hand, the expenditure (cost) is connected to capital investment, operating expenses, maintenance expenses, raw material and fuel expenses, personnel expenses, and carbon tax.

The decarbonization measures 602 include visualization by organization, visualization by product, purchase of renewable energy power sources, process electrification, introduction of renewable energy, change of production base, change of production plan, change of process, change of raw materials/components, change of procurement source, change of transportation method, energy saving of the company's own products, introduction of hydrogen/ammonia, introduction of biomass, introduction of carbon capture usage and storage (CCUS), hydrogen steelmaking, and product charge.

The decarbonization/reduction target 603 includes overall, Scope 1 (direct emissions), Scope 2 (indirect emissions), and categories 1 to 15 of Scope 3 (others) (corresponding to "Cat 1 to Cat 15" in the drawing). Note that, Scope 1 to Scope 3 indicate, for example, indices of greenhouse gas emission amounts in a supply chain related to a product. Scope 1 indicates a direct emission amount of greenhouse gas accompanying business activities. Scope 2 indicates an indirect emission amount of greenhouse gas in a manufacturing stage of heat or energy used in business activities. Scope 3 indicates an emission amount of greenhouse gas indirectly emitted other than Scope 1 and Scope 2 described above.

An arrow extending from the decarbonization/reduction target 603 to the decarbonization measures 602 indicates that the decarbonization/reduction target 603 at a trailing end of the arrow affects the decarbonization measures 602 at a leading end of the arrow. An arrow extending from the decarbonization measures 602 to the management KPI tree 601 indicates that a decarbonization measure at a trailing end of the arrow affects an item at a leading end of the arrow.

In the illustrated example, for example, "Scope 1 direct emissions" of the decarbonization/reduction target 603 affects, for example, "renewable energy introduction" of the decarbonization measures 602, and the "renewable energy introduction" indicates, for example, an effect on "capital investment" and "operation amount" of "lipid (cost)" of "profit" in the management KPI tree 601.

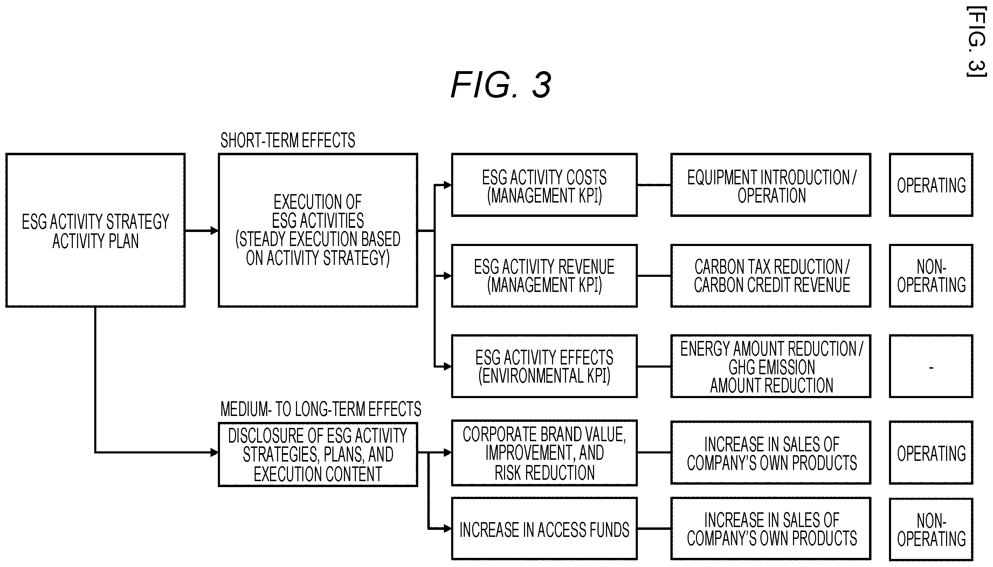

FIG. 3 is a diagram illustrating an example of a causal relationship in which ESG activities affect management. In the illustrated example, ESG activities are considered by being divided into "strategy" and "execution". "Strategy" leads to corporate brand value and an increase in access funds by disclosing medium- to long-term activity plans and execution content. On the other hand, "execution" is "execution" based on a plan, and specific costs and reduction of greenhouse gas (GHG) emissions can be achieved. Accordingly, revenue such as CC revenue accompanying GHG emission reduction can also be expected. The term "plan" in the following description contributes to enhancement of medium- to long-term corporate value, and leads to improvement in product sales due to improvement in brand value and to an increase in access funds (investment).

Activity plans of an ESG strategy are related, as short-term effects, to execution of ESG activities (steady execution based on an activity strategy) and are related, as medium- to long-term effects, to disclosure of an ESG activity strategy, a plan, and execution content.

Execution of ESG activities is related to ESG activity costs (corresponding to management KPIs), ESG activity revenue (corresponding to management KPIs), and ESG activity effects (corresponding to decarbonization KPIs). ESG activity costs (corresponding to management KPIs) are related to, for example, equipment introduction/operation, and the equipment introduction/operation is one of the operating revenues. ESG activity revenue is related to, for example, carbon tax reduction/carbon credit revenue, and the carbon tax reduction/carbon credit revenue is one of the non-operating revenues. ESG activity effects are related to energy amount reduction/GHG emission amount reduction and do not correspond to operating revenue or non-operating revenue.

On the other hand, ESG activity strategies, plans, and execution content are related to corporate brand value, improvement/risk reduction, and an increase in access funds. Corporate brand value and improvement/risk reduction are related to increased sales of the company's own products, and the increased sales are one of the operating revenues. An increase in access funds is related to increased sales of the company's own products, and the increased sales are one of the non-operating revenues.

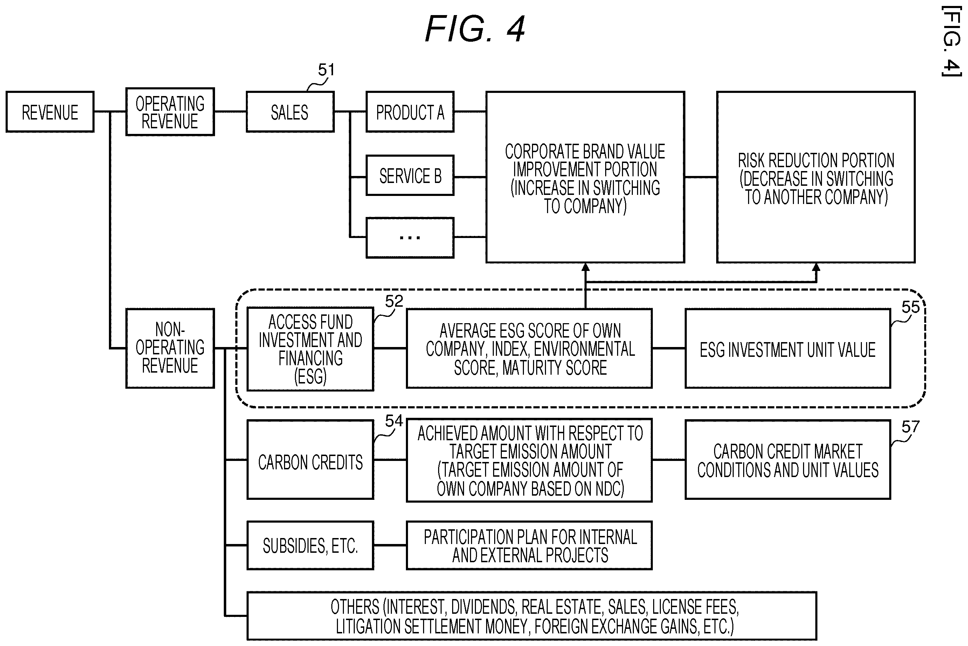

FIG. 4 is a diagram illustrating an example of a revenue prediction algorithm. In the illustrated example, difficulty in estimating a revenue portion is overcome, an estimate that enables strategic planning is presented, and prediction is performed with granularity on the order of years. In addition, in the illustrated example, effects are calculated by dividing revenue from ESG activities into operating revenue and non-operating revenue.

"Operating revenue" leads to increased share and prevention of switching away from its own company. Here, for an uplift portion, a baseline improvement portion is recorded at an annual rate or the like. In "non-operating revenue", access funds, carbon credits, and acquisition of subsidies are directly related to ESG activities. "Access funds" will be described later.

First, revenue includes operating revenue and non-operating revenue. The operating revenue includes sales. The sales are related to product A as an example of a product, service B as an example of a service, and the like.

Product A, service B, and the like are related to a corporate brand value improvement portion (for example, increased switching to the own company), and the corporate brand value improvement portion produces an effect in which ESG activities are recognized and the share of the company's products increases, and the effect is expressed as an annual rate or the like.

In addition, the corporate brand value improvement portion leads to a risk reduction portion (for example, a decrease in switching to another company), and the risk reduction portion produces an effect in which ESG activities are recognized and business partners leaving the own company are reduced, and the effect is expressed as an annual rate or the like.

On the other hand, the non-operating revenue includes investment and financing of access funds (ESG), carbon credits, subsidies, and the like, and others (interest, dividends, real estate, sales, license fees, litigation settlement money, foreign exchange gains, and the like).

Investment and financing of access funds are related to an average ESG score of the own company, an index, an environmental score, a maturity score, carbon credits, subsidies, and the like. Here, the average ESG score and the like of the own company can affect the above-described corporate brand value improvement portion and risk reduction portion. The average ESG score and the like of the own company correspond to ESG-related unit values.

The carbon credits are related to an achieved amount with respect to a target emission amount (for example, a target emission amount of the own company based on nationally determined contribution (NDC)), and the achieved amount can affect the above-described carbon credit market conditions and trend unit values 57. Subsidies and the like are related to a participation plan for internal and external projects.

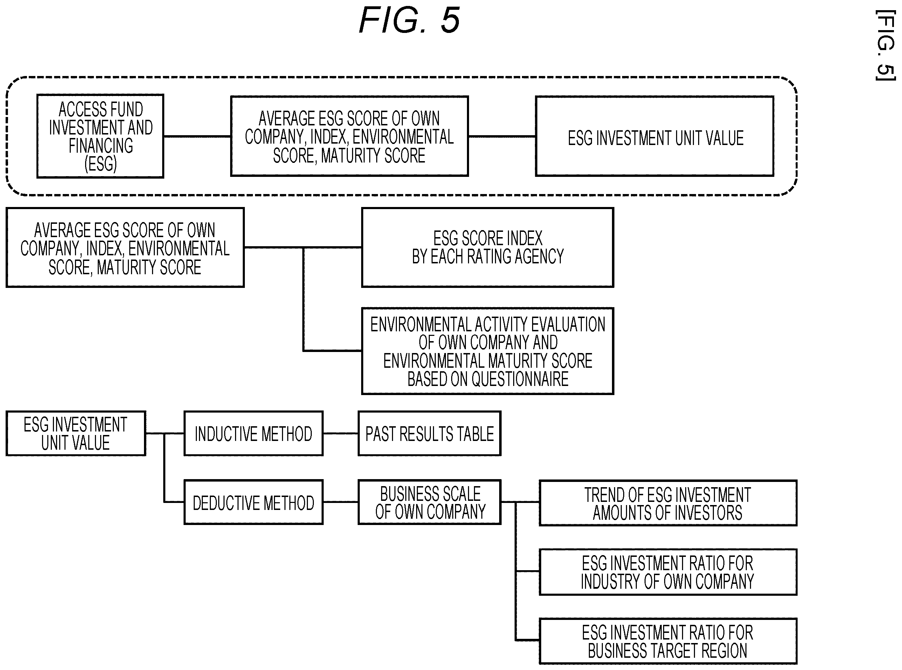

FIG. 5 is a diagram illustrating an example of an increase estimate of an ESG non-investment amount. In the illustrated example, with respect to access fund investment, an investment amount is obtained by linking to the "ESG score" of the own company and multiplying by a unit value. In addition, in the following description, "ESG investment unit value" is, as an example, as follows. In the present embodiment, an inductive method based on actual results and a deductive method useful for future prediction are used. Selection is made as to which method is used. In the deductive method, an investment amount unit value is obtained by multiplying a trend of ESG investment amount of money by an industry of the own company (for example, reflecting a level of interest in ESG) and a regional investment ratio (for example, reflecting a level of interest for each region) and apportioning according to a business scale of the own company.

First, access fund investment and financing (ESG) are related to an average ESG score of the own company, an index, an environmental score, and a maturity score. The average ESG score and the like of the own company correspond to the above-described ESG investment unit value.

The average ESG score and the like of the own company are related to ESG score specifications according to ratings by respective rating agencies (for example, an average value and a designated period) and to an environmental activity evaluation and a maturity score of the own company based on a questionnaire. Here, for the ESG score, a function is provided for calculating results of ESG activities on the basis of an "ESG score" by a third-party organization. In addition, an environmental maturity score based on an environmental activity evaluation by a questionnaire method or the like can also be used.

On the other hand, the ESG investment unit value is related to an inductive method and a deductive method. The inductive method uses a past results table. The past results table includes, for example, ESG scores versus investment amounts of the own company, peer companies, and the like in the past.

On the other hand, the deductive method uses a business scale of the own company. The business scale of the own company includes a share in an industry. The business scale of the own company is affected by a trend of ESG investment amounts of investors (for example, a trend and prediction of ESG investment amounts worldwide), an ESG investment ratio for an industry of the own company (for example, an investment ratio of the industry sector to all investments), and an ESG investment ratio for a business target region (for example, a regional ratio of a business target area to all ESG investments).

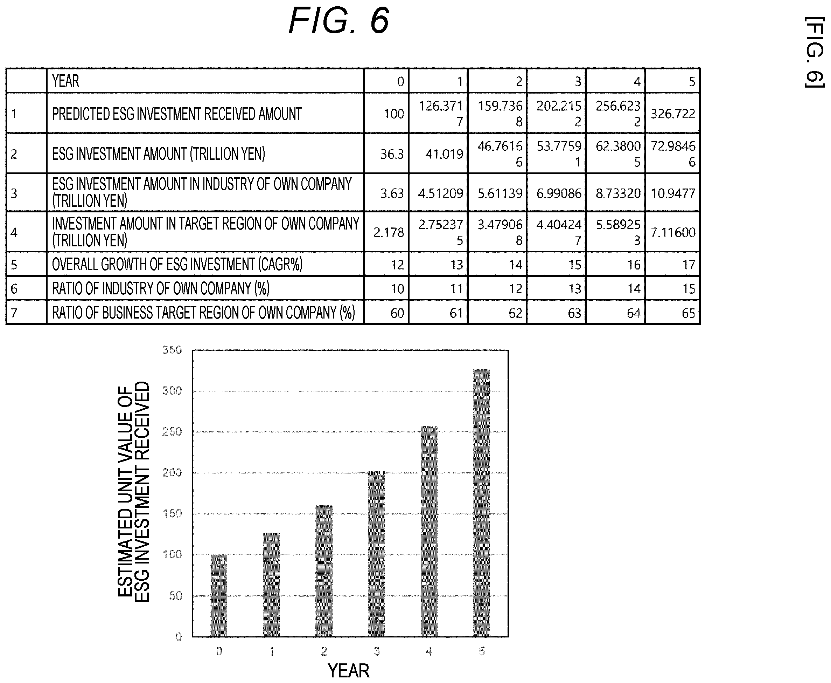

FIG. 6 is a diagram illustrating a prediction example of an ESG investment revenue unit price using a deductive method. First, in the present embodiment, the "ESG investment unit value" is assumed to calculate an expected revenue amount of an ESG investment amount for the own company by multiplying, on the basis of a base year (year 0), growth in interest in ESG investment (ESG investment amount) and then, on the basis of the growth, multiplying an industry ratio of the own company and a regional ratio. Therefore, the "ESG investment unit value" indicates a normal ESG revenue amount that can be expected when ESG activities are carried out at a level comparable to other companies.

In the prediction example of an ESG investment revenue unit price using the deductive method, as indicated in the lower graph in the drawing, an estimate of an ESG investment amount unit value increases year by year (0 to 5).

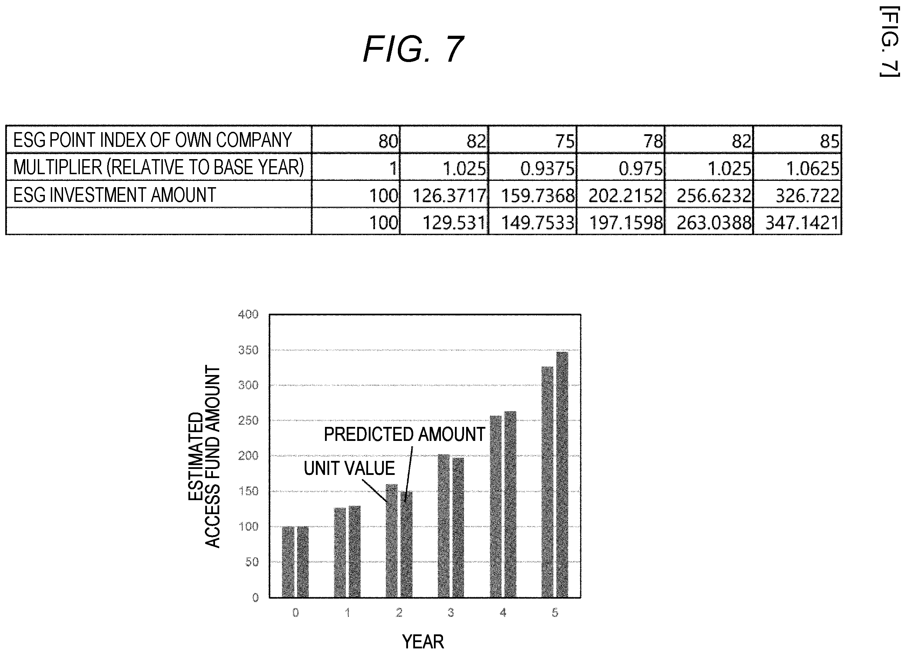

FIG. 7 is a diagram illustrating an example of a predicted value of access funds (ESG). Access fund (ESG) prediction is obtained by multiplying the ESG investment amount unit value indicated in FIG. 6 described above by a representative value (index) of ESG points issued by a third-party organization. A simulation is performed for a situation in which an ESG point index fluctuates depending on year. In the illustrated example, an actual ESG investment amount varies relative to an estimate according to ESG points of the own company.

Here, an example of quantitative determination logic for revenue in the present embodiment will be described. In the present embodiment, effects on a decarbonization KPI and a management KPI due to introduction of renewable energy are examined.

In the present embodiment, with respect to (1) decarbonization KPI, a required measure introduction amount is inversely calculated from a decarbonization target. In the present embodiment, when solar cell introduction is set to XXX (XXX: numerical value) kilowatts ("XXX_KW"), for example, a decarbonization reduction amount AA [ton] is obtained by AA [ton] = XX (XX: numerical value) kWh × YY (YY: year) × ZZ (ZZ: numerical value) [ton]/kW.

In addition, in the present embodiment, with respect to (2) management KPI, "profit/loss" = "revenue" - "expenditure", that is, (amount of increased (maintained) orders for product A + contribution to increase in investment capital + contribution to stock revenue + CC + subsidies) - (capital investment + operating expenses + maintenance expenses - carbon tax) = BB (BB: amount of money) JPY (Japanese yen).

In the present embodiment, final judgment logic serving as judgment criteria for implementing a measure includes the following two items. In first judgment logic, judgment is made on the basis of profitability of a business. In the first judgment logic, a payback plan rather than a single year is used. If BB > 0 JPY, execution is performed, whereas if BB < 0 JPY, non-execution or managerial judgment is selected. Examples of managerial judgment include executing a measure when, even if a deficit occurs, the deficit is very small relative to a company scale (or is within a range regarded as allowable investment), or when implementation is judged despite a deficit in view of future prospects.

In second judgment logic, judgment is made on the basis of an effect of investment on decarbonization. In the second judgment logic, an investment amount per unit CO2 reduction amount is evaluated, and when the investment amount is higher than a carbon tax rate, non-execution is selected (execution may be selected in some cases), and when the investment amount is lower than the carbon tax rate, execution is selected.
BB (BB: amount of money) JPY (Japanese yen)/AA (AA: numerical value) of CO2 [ton]) > carbon tax rate

The simulation device 300 has the above-described configuration, and next, an example of a simulation screen 500 displayed on the dashboard 100 of the simulation device 300 will be described.

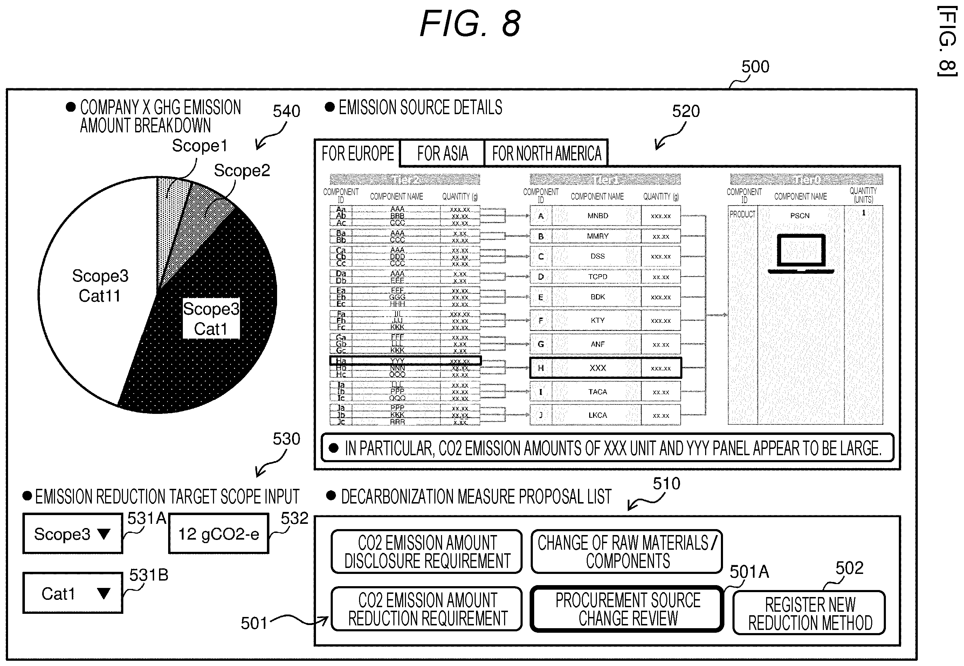

FIGS. 8 to 10 are diagrams each illustrating an example of the simulation screen 500. The simulation screen 500 is an example of a screen regarding the simulation and is displayed on the dashboard 100 illustrated in FIG. 1. In the present embodiment, the simulation screen 500 is used to execute a simulation regarding effects of measures to be taken ("decarbonization measures") when a decarbonization target and a financial balance target are taken into consideration.

In the simulation screen 500 illustrated in FIG. 8, a decarbonization measure proposal list 510 is arranged at a lower right, an emission reduction detail field 520 is arranged at an upper right, an emission reduction target scope input field 530 is arranged at a lower left, and a GHG emission amount breakdown field 540 is arranged at an upper left.

In the decarbonization measure proposal list 510, cursors 501 corresponding to a plurality of decarbonization measures are arranged in a vertical direction, and any one of the cursors can be selected. In the illustrated example, a state in which "procurement source change review" is selected is shown.

The simulation screen 500 presents a plurality of introduction conditions and also displays an execution result of a simulation when decarbonization measures based on a predetermined introduction condition selected from the plurality of introduction conditions are implemented (display step).

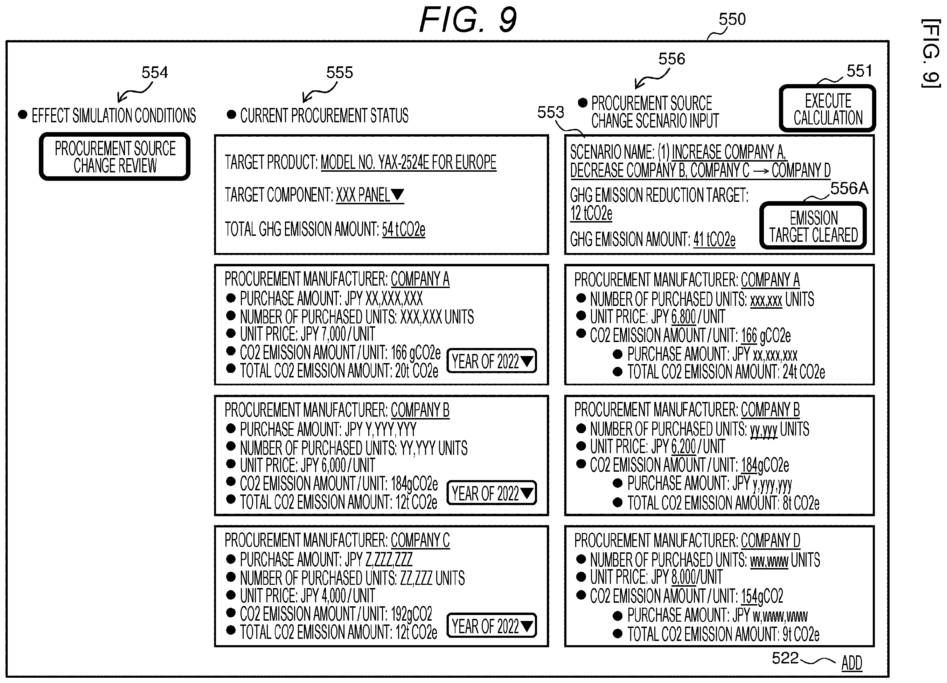

Specifically, when the operator clicks any one of the cursors 501 for the decarbonization measures (for example, "procurement source change review"), as illustrated in FIG. 9, a condition input form 550 for inputting effect simulation conditions as an example of introduction conditions for the decarbonization measures is displayed (corresponding to a later-described decarbonization measure detail input screen).

In the condition input form 550, at an upper left, for example, a display 554 of the selected "procurement source change review" is provided as the effect simulation conditions, at a center in a left-right direction, a current procurement status field 555 is displayed, and at a right side, a procurement source change scenario input field 556 is displayed.

In the current procurement status field 555, at an upper side, a target product, a target component, and a total GHG emission amount are displayed, and at a lower side, at least one procurement-source manufacturer (corresponding to "procurement manufacturer" in the drawing) is displayed. Here, as procurement-source manufacturers, for example, company C is included in addition to company A and company B.

Meanwhile, in the procurement source change scenario input field 556, at an upper side, a display field 553 into which a scenario name, a GHG emission reduction target, and a GHG emission amount can be input is displayed, at a lower right, an add button 552 for adding a procurement source and performing a simulation is displayed, and at an upper right, a calculation execution button 551 for executing the simulation is displayed.

Here, as a result of a simulation when, as indicated by the scenario name, a setting is made to reduce a procurement amount from company B and procure components from company D instead of components from company C, "12 t CO2e" is displayed as the GHG emission reduction target and "41 t CO2e" is displayed as the GHG emission amount. Note that, in the present embodiment, "t" indicates the weight unit "ton". In the present embodiment, because a result of the simulation is determined to clear, for example, the decarbonization target, a display 556A to that effect is displayed as, for example, "emission target cleared".

In addition, in the decarbonization measure proposal list 510, a new reduction method registration button 502 is displayed at a lower part. The new reduction method registration button 502 is pressed when a new reduction method is to be registered as the above-described cursor. When the new reduction method registration button 592 is pressed, a form for inputting a new reduction method is displayed, and the new reduction method can be registered. The registered new reduction method is additionally displayed as a cursor in the decarbonization measure proposal list 21.

Meanwhile, the emission reduction detail field 520 illustrated in FIG. 8 is a display area capable of identifying an emission source, and Tier 0 to Tier 2 are displayed according to shipment destinations such as for Europe, for Asia, and for North America. Tier 0 indicates a target product. Here, product PSCN is exemplified. Tier 1 indicates a component name and a quantity (weight) [g] for each component identifier (ID) of components constituting the target product. Here, as a target component name, "XXX unit" is displayed, for example, in a highlighted manner as a component problematic in achieving the decarbonization target. Tier 2 indicates a component name and a quantity (weight) [g] for each component ID of each component. Here, as a target component name, "YYY panel" is displayed, for example, in a highlighted manner as a component problematic in achieving the decarbonization target.

The emission reduction target scope input field 530 includes a target scope selection field 531A, a target category selection field 531B, and a target value field 532. When the target scope selection field 531 is clicked, a plurality of target scopes is displayed in a pull-down menu form, and any one of the scopes can be selected (in the illustrated example, "Scope 3" is selected).

When the target category selection field 531B is clicked, a plurality of target categories is displayed in a pull-down menu form, and any one of the categories can be selected (in the illustrated example, "Cat 1 (category 1)" is selected).

The target value field 532 is an input field for inputting a target value corresponding to the scope selected in the target scope selection field 531 and the category selected in the target category selection field 531B. A simulation is executed according to the input contents.

The GHG emission amount breakdown field 540 displays, for example with respect to company X, a breakdown of a GHG emission amount as a result of executing a simulation according to the input contents of the emission reduction target scope input field 530 for a decarbonization measure corresponding to the cursor selected in the decarbonization measure proposal list 510.

In the illustrated example, for example, ratios of emission amounts relating to Scope 1, Scope 2, category 1 of Scope 3 (corresponding to "Cat 1" in the drawing), and category 11 of Scope 3 (corresponding to "Cat 11" in the drawing) are displayed.

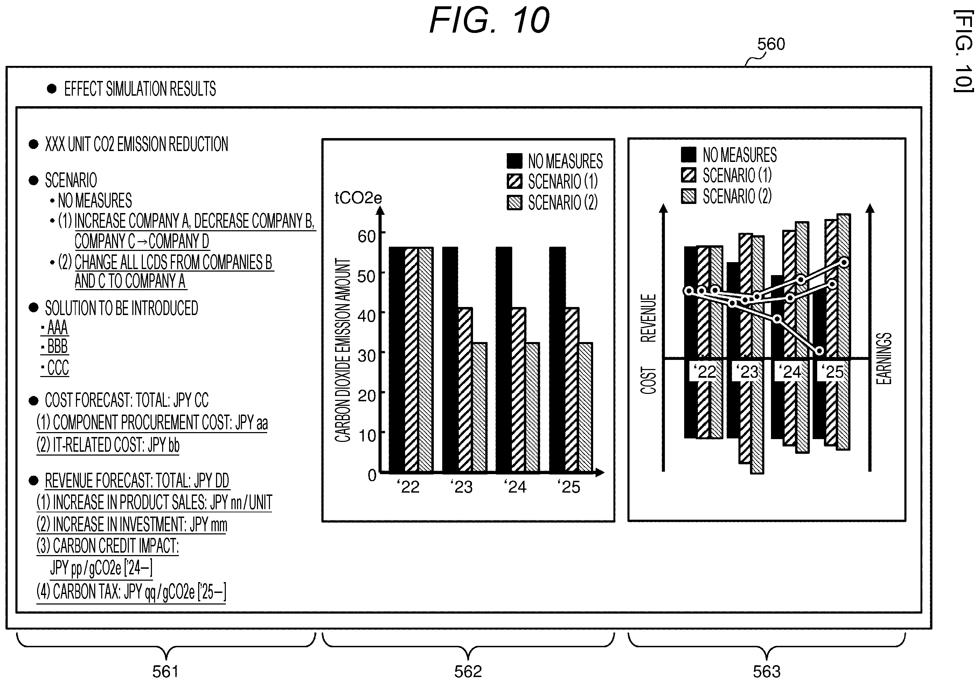

In a state in which a simulation result is displayed in the display field 553 in the condition input form 550 illustrated in FIG. 9, when the display field 553 is pressed, a simulation result screen 560 illustrated in FIG. 10 and indicating detailed contents of an effect simulation result is displayed.

The simulation result screen 560 displays, in a display field 561 at a left side, the above-described scenario, a solution to be introduced, a cost forecast, and a revenue forecast. The revenue prediction includes indirect revenue.

The simulation result screen 560 displays, in a display field 562 at a center in a left-right direction, as simulation results of annual carbon dioxide emission amounts, a case where no measure is taken and a case where a simulation is executed for at least one scenario (in the illustrated example, a case of scenario (1) and a case of scenario (2)). The scenario (1) and the scenario (2) each indicate a scenario when a decarbonization measure proposal is adopted under the selected introduction conditions.

In the illustrated example, a configuration is provided such that adopting the scenario (2) can be visually understood to be more effective in suppressing a carbon dioxide emission amount than adopting the scenario (1), which is more effective in suppressing the carbon dioxide emission amount than a case without measures.

The simulation result screen 560 indicates, for example, the financial balance target and displays, in a display field 563 at a right side, as simulation results of annual earnings, a case where no measure is taken and a case where a simulation is executed for at least one scenario (in the illustrated example, a case of scenario (1) and a case of scenario (2)). In the illustrated example, the farther upward a graph extends, the larger the revenue, and the farther downward a graph extends, the larger the cost.

In the illustrated example, adopting the scenario (2) can be visually understood to be more effective in increasing earnings than adopting the scenario (1), which is more effective in suppressing the carbon dioxide emission amount than a case without measures. At the same time, in the scenario (1) and the scenario (2), although the cost is larger than in a case where no measure is taken, the scenario (1) and the scenario (2) can be seen to be scenarios to be implemented because the revenue exceeds the increase in cost.

As described above, the simulation device 300 according to the present embodiment includes: a target input unit 1 that inputs a decarbonization target relating to decarbonization and a financial balance target relating to a financial balance; a measure proposal selection unit 2 that sets introduction conditions for a decarbonization measure corresponding to the decarbonization target; a financial information processing unit 10 that calculates direct revenue and expenditures when the decarbonization measures are implemented under the introduction conditions, and also estimates indirect revenue resulting from non-financial information; a determination support unit 7 that, when the decarbonization measures are implemented under the introduction conditions, performs a simulation as to whether or not the financial balance target and the decarbonization target are satisfied taking the indirect revenue into account; and a dashboard 100 that outputs a screen regarding the simulation by the determination support unit 7.

The simulation method according to the present embodiment includes: a target input step of accepting, by the target input unit 1, input of a decarbonization target relating to decarbonization and a financial balance target relating to a financial balance; a condition setting step of setting, by the measure proposal selection unit 2, introduction conditions for a decarbonization measure corresponding to the decarbonization target; a financial information processing step of calculating, by the financial information processing unit 10, direct revenue and expenditures when the decarbonization measures are implemented under the introduction conditions, and also estimating indirect revenue resulting from non-financial information; a determination support step of performing, by a determination support unit 7, when the decarbonization measures are implemented under the introduction conditions, a simulation as to whether or not the financial balance target and the decarbonization target are satisfied taking the indirect revenue into account; and an output step of outputting, to the dashboard 100, a screen regarding the simulation by the determination support step.

With such a configuration, indirect revenue can be quantitatively presented in formulating decarbonization measures, and therefore contribution can be made to agreement by an operator such as a manager.

In the present embodiment, in the financial information processing step, the financial information processing unit 10 includes the risk management unit 90 (the ESG investment capital increase impact calculation unit 52 and the carbon credit calculation unit 54 being main examples) that estimates indirect revenue resulting from non-financial information. With such a configuration, decarbonization measures can be formulated on the basis of not only direct revenue but also quantitative indirect revenue.

In the present embodiment, the risk management unit 90 manages at least one of a downside risk and an upside risk that can affect estimation of the above-described indirect revenue. With such a configuration, decarbonization measures can be formulated in consideration of such risks.

In the present embodiment, in the financial information processing step, the risk management unit 90 predicts the downside risk and the upside risk by machine learning. With such a configuration, decarbonization measures can be formulated on the basis of the risks corresponding to results of the machine learning.

In the present embodiment, in the financial information processing step, the approximate revenue calculation unit 5 calculates revenue in a direction in which revenue decreases when the downside risk is managed by the risk management unit 90, whereas the approximate revenue calculation unit 5 calculates revenue in a direction in which revenue increases when the upside risk is managed by the risk management unit 90. With such a configuration, decarbonization measures can be formulated according to the risks managed by the risk management unit 90.

In the present embodiment, in the display step, the screen regarding the simulation presents a plurality of introduction conditions, and also displays in a display mode including an execution result of a simulation when the decarbonization measures based on a predetermined introduction condition selected from the plurality of introduction conditions are implemented.

Note that the present invention is not limited to the above-described embodiment, and various modifications and equivalent configurations within the spirit of the appended claims are included. For example, the above-described embodiment has been described in detail in order to explain the present invention clearly, and the present invention is not necessarily limited to a configuration including all of the described components. In addition, in the present embodiment, each element described in parallel may be configured such that at least one of the elements is serially connected to another element.

### Industrial Applicability

The present invention can be applied to a simulation device relating to a technology for presenting a decarbonization measure proposal corresponding to a decarbonization target.

### Reference Signs List

1 target input unit
2 measure proposal selection unit
3 specification calculation unit
4 approximate cost calculation unit
5 approximate revenue calculation unit
6 profit calculation unit
7 determination support unit
51 product sales target calculation unit
52 ESG investment capital increase impact calculation unit
90 risk management unit
100 dashboard
200 KPI tree
300 simulation device

## Claims

1. A simulation device comprising:
a target input unit that inputs a decarbonization target relating to decarbonization and a financial balance target relating to a financial balance;
a condition setting unit that sets introduction conditions for a decarbonization measure corresponding to the decarbonization target;
a financial information processing unit that calculates direct revenue and expenditures when the decarbonization measures are implemented under the introduction conditions, and also estimates indirect revenue resulting from non-financial information;
a determination support unit that, when the decarbonization measures are implemented under the introduction conditions, performs a simulation as to whether or not the financial balance target and the decarbonization target are satisfied taking the indirect revenue into account; and
an interface that outputs a screen regarding the simulation by the determination support unit.

2. The simulation device according to claim 1, wherein
the financial information processing unit includes
an indirect revenue estimation unit that estimates indirect revenue resulting from the non-financial information.

3. The simulation device according to claim 2, wherein
the indirect revenue estimation unit
manages at least one of a downside risk and an upside risk that can affect estimation of the indirect revenue.

4. The simulation device according to claim 3, wherein
the indirect revenue estimation unit
predicts the downside risk and the upside risk by machine learning.

5. The simulation device according to claim 3, wherein
the financial information processing unit calculates revenue in a direction in which revenue decreases when the downside risk is managed by the indirect revenue estimation unit, whereas
the financial information processing unit calculates revenue in a direction in which revenue increases when the upside risk is managed by the indirect revenue estimation unit.

6. The simulation device according to claim 1, wherein
a screen regarding the simulation by the determination support unit
presents a plurality of the introduction conditions, and also includes an execution result of a simulation when the decarbonization measures based on a predetermined introduction condition selected from the plurality of introduction conditions are implemented.

7. A simulation method comprising:
a target input step of accepting, by a target input unit, input of a decarbonization target relating to decarbonization and a financial balance target relating to a financial balance;
a condition setting step of setting, by a condition setting unit, introduction conditions for a decarbonization measure corresponding to the decarbonization target;
a financial information processing step of calculating, by a financial information processing unit, direct revenue and expenditures when the decarbonization measures are implemented under the introduction conditions, and also estimating indirect revenue resulting from non-financial information;
a determination support step of performing, by a determination support unit, when the decarbonization measures are implemented under the introduction conditions, a simulation as to whether or not the financial balance target and the decarbonization target are satisfied taking the indirect revenue into account; and
an output step of outputting, to an interface, a screen regarding the simulation by the determination support step.

8. The simulation method according to claim 7, wherein
in the financial information processing step,
an indirect revenue estimation unit estimates indirect revenue resulting from the non-financial information.

9. The simulation method according to claim 8, wherein
the indirect revenue estimation unit
manages at least one of a downside risk and an upside risk that can affect estimation of the indirect revenue.

10. The simulation method according to claim 9, wherein
the indirect revenue estimation unit
predicts the downside risk and the upside risk by machine learning.

11. The simulation method according to claim 9, wherein
the financial information processing unit
calculates revenue in a direction in which revenue decreases when the downside risk is managed by the indirect revenue estimation unit, whereas
the financial information processing unit calculates revenue in a direction in which revenue increases when the upside risk is managed by the indirect revenue estimation unit.

12. The simulation method according to claim 7, wherein
a display step of presenting a plurality of the introduction conditions, and also displaying an execution result of a simulation when the decarbonization measures based on a predetermined introduction condition selected from the plurality of introduction conditions are implemented, on a screen regarding the simulation by the determination support unit, is executed.
